# EUROPÄISCHE PATENTSCHRIFT

(11) **EP 3 552 344 B1**
(45) Veröffentlichungstag und Bekanntmachung des Hinweises auf die Patenterteilung: **21.07.2021**
(21) Anmeldenummer: 17809282.1
(22) Anmeldetag: 05.12.2017
(51) Int. Cl.: H04L 9/32, G06F 21/64

(54) **BIDIREKTIONAL VERKETTETE BLOCKCHAINSTRUKTUR**
BIDIRECTIONALLY LINKED BLOCKCHAIN STRUCTURE
STRUCTURE DE CHAÎNE DE BLOCS À CHAÎNAGE BIDIRECTIONNEL

(30) Priorität: 08.12.2016 DE 102016224533
(43) Veröffentlichungstag der Anmeldung: 16.10.2019
(73) Patentinhaber: Bundesdruckerei GmbH, 10969 Berlin (DE)
(72) Erfinder: KOMAROV, Ilya, 13507 Berlin (DE); PAESCHKE, Manfred, 16348 Wandlitz (DE); DRESSEL, Olaf, 14641 Wustermark (DE)
(74) Vertreter: Richardt Patentanwälte PartG mbB
(86) Internationale Anmeldenummer: PCT/EP2017/081465
(87) Internationale Veröffentlichungsnummer: WO 2018/104277

(56) Entgegenhaltungen:
- WO-A1-2016/161073
- US-A1- 2016 261 690
- JUAN GARAY ET AL: "The Bitcoin Backbone Protocol: Analysis and Applications", INTERNATIONAL ASSOCIATION FOR CRYPTOLOGIC RESEARCH,, Bd. 20160127:132350, 27. Januar 2016 (2016-01-27), Seiten 1-37, XP061019626, [gefunden am 2016-01-27]

## Beschreibung

Die Erfindung betrifft ein Verfahren zum manipulationssicheren Speichern von Daten in einer bidirektional verketteten Blockchainstruktur sowie ein Computersystem zum Ausführen des Verfahrens.

Aus dem Stand der Technik ist die Speicherung von Daten in unidirektional verketteten Blockchainstrukturen, d. h. Blockkettenstrukturen, bekannt. Beispielsweise werden Blockchainstrukturen verwendet, um Transaktionen von Kryptowährungen, wie beispielsweise dem Bitcoin-Zahlungssystem, zu protokollieren. Eine Blockchain stellt eine erweiterbare Liste von Datensätzen bereit, welche in einzelnen Blöcken angeordnet sind. Die Integrität der einzelnen Blöcke wird im Stand der Technik durch eine unidirektionale Verkettung unter Verwendung kryptografischer Prüfsummen der einzelnen Blöcke gesichert. Dadurch, dass jeder Block eine kryptografische Prüfsumme des vorausgehenden Blocks inklusive der in dem vorausgehenden Block gespeicherten kryptografischen Prüfsumme umfasst, ergibt sich eine Verkettung der Blöcke, bei welcher jeder Block eine Prüfsumme umfasst, welche auf den Inhalten aller vorausgehenden Blöcke beruht. Somit ist es schwer, eine solche Blockchain nachträglich zu manipulieren, da hierzu nicht nur ein einzelner Block manipuliert werden müsste, sondern alle nachfolgenden Blöcke, da die Prüfsumme jedes nachfolgenden Blocks auch den zu manipulierenden Block umfasst.

Bekannte Blockchains implementieren jedoch nur eine unidirektionale Verkettung und damit Absicherung der Daten, da nur Dateninhalte vorangehender Blöcke bei der Verkettung berücksichtigt werden. So lässt sich anhand der Verkettung prüfen, ob ein vorangehender Block einer vorgelegten Blockchainstruktur manipuliert wurde. Es lässt sich jedoch nicht prüfen, ob die vorgelegten Blockchainstruktur vollständig ist. Insbesondere lässt sich nicht prüfen, ob möglicherweise ein Teil abgeschnitten wurde. Zudem lässt sich nicht prüfen, ob der letzte Block manipuliert wurde.

Ferner werden Daten in bekannten Blockchainstrukturen, wie etwa dem Bitcoin-Zahlungssystem im Klartext gespeichert, sodass sie für jedermann einsehbar sind. Dies kann sich jedoch als problematisch erweisen, falls sicherheitsrelevante Daten in der Blockchain gespeichert werden sollen.

Die WO 2016/161073 A1 beschreibt ein Computersystem, das mit einem verteilten Blockchain-Rechnersystem kommuniziert, das mehrere Rechenknoten umfasst. Das Computersystem speichert ein Auftragsbuch und eine Vielzahl von digitalen Geldbörsen, die verschiedenen Kunden zugeordnet sind. Das Computersystem empfängt neue Datentransaktionsanforderungen, die dem Auftragsbuch hinzugefügt werden. Eine Übereinstimmung zwischen Datentransaktionsanforderungen wird identifiziert und Hashes, die den digitalen Geldbörsen zugeordnet sind, die den jeweiligen Datentransaktionsanforderungen zugeordnet sind, werden erzeugt. Die Parteien erhalten jeweils die Hashs der anderen Partei zusammen mit Informationen über die Übereinstimmung und jede Partei bewirkt, dass Blockchain-Transaktionen zur Blockchain des Blockchain-Computersystems hinzugefügt werden. Das Computersystem überwacht dann die Blockchain, um festzustellen, ob beide Seiten der Übereinstimmung der Blockchain hinzugefügt wurden.

Der Erfindung liegt demgegenüber die Aufgabe zugrunde, ein sicheres Verfahren zum Speichern von Daten in einer Blockchainstruktur zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum manipulationssicheren Speichern von Daten in einer bidirektional verketteten Blockchainstruktur, wobei das Verfahren umfasst:
- Erzeugen eines zusätzlichen Blocks für die Blockchainstruktur, welcher die zu speichernden Daten umfasst,
- Bereitstellen einer blockunabhängigen Verkettungsfunktion,
- Erzeugen einer ersten blockabhängigen bidirektionalen Verkettungsfunktion aus der blockunabhängigen Verkettungsfunktion, wobei für die Erzeugung ein Dateninhalt des letzten Blocks der Blockchainstruktur als ein erster Parameter und ein Dateninhalt des zusätzlichen Blocks für die Blockchainstruktur als ein zweiter Parameter der blockunabhängigen Verkettungsfunktion verwendet werden, sodass die erzeugte ersten blockabhängigen bidirektionalen Verkettungsfunktion paarweise sowohl von dem letzten Block der Blockchainstruktur als auch von dem zusätzlichen Block für die Blockchainstruktur abhängig ist,
- bidirektionales Verketten des letzten Blocks der Blockchainstruktur mit dem zusätzlichen Block für die Blockchainstruktur, wobei das bidirektionales Verketten ein Transformieren des letzten Blocks der Blockchainstruktur in ein erstes Chiffrat unter Verwendung der ersten blockabhängigen bidirektionalen Verkettungsfunktion und ein Transformieren des zusätzlichen Blocks für die Blockchainstruktur unter Verwendung der ersten blockabhängigen bidirektionalen Verkettungsfunktion in ein zweites Chiffrat umfasst,
- Speichern der resultierenden erweiterten Blockchainstruktur, welche das erste und das zweite Chiffrat umfasst.

Unter einer Blockchainstruktur wird hier eine Datenstruktur verstanden, die eine Blockchain bildet. Unter einer "Blockchain" wird eine geordnete Datenstruktur verstanden, welche eine Mehrzahl von miteinander verketteten Datenblöcken umfasst. Im Falle von bekannten unidirektional verketteten Blockchainstrukturen wird jeder Block der Blockchain durch einen Hash-Wert identifiziert und referenziert einen Vorgängerblock in der Blockchain. Für Beispiele einer unidirektional verketteten Blockchain vergleiche https://en.wikipedia.org/wiki/Block_chain_(database) und "Mastering Bitcoin", Chapter 7, The Blockchain, Seite 161 ff. Das Konzept der Blockchains wurde im Jahre 2008 in einem White Paper unter dem Pseudonym Satoshi Nakamoto zu Bitcoin beschrieben ("Bitcoin: Peer-to-Peer Electronic Cash System" (https://bitcoin.org/bitcoin.pdf)). Diese Blockchain besteht aus einer Reihe von Datenblöcken, in denen jeweils ein oder mehrere Einträge bzw. Transaktionen zusammengefasst und mit einer Prüfsumme in Form eines Hashwerts versehen sind. Neue Blöcke der Blockchain werden in einem üblicher Weise rechenintensiven Prozess erzeugt, der auch als sogenanntes Mining bezeichnet wird. Diese neu erzeugten Blöcke werden anschließend der Blockchain hinzugefügt und über ein Netzwerk an alle Teilnehmer, bzw. Knoten des Netzwerks, verbreitet.

Jeder Block der Blockchain enthält in seinem Header den Hash des gesamten vorherigen Blockheaders. Somit wird die Reihenfolge der Blöcke eindeutig festgelegt und es entsteht eine Kettenstruktur. Durch die so implementierte Verkettung der einzelnen Blöcke miteinander wird erreicht, dass ein nachträgliches Modifizieren vorangegangener Blöcke bzw. einzelner von diesen umfasst und über den Root-Hashwert gesicherten Transaktionen praktisch ausgeschlossen ist, da hierfür die Hashwerte aller nachfolgenden Blöcke in kurzer Zeit ebenfalls neu berechnet werden müssten.

Durch eine Anpassung der notwendigen Rechenintensität für die Erstellung jeweils neuer Blöcke kann die Sicherheit zusätzlich erhöht werden. Die für die Erstellung neuer Blöcke notwenige Rechenintensität lässt sich über Anforderungen an den Hashwert des zu erstellenden neuen Blocks steuern. Werden gültige Blöcke durch ein rechenintensive Verfahren, wie das zuvor genannte Bitcoin-Verfahren erzeugt, so vertrauen die Teilnehmer des Blockchain-Netzwerks der längsten gültigen Blockchain, da hinter dieser die meiste Rechenleistung steht und somit angenommen werden kann, dass diese von der Mehrheit der Teilnehmer als gültig anerkannt wird. Kommt es beispielsweise dazu, dass ein Fork, d.h. eine Verzweigung, in der Blockchain entsteht, setzt sich irgendwann der Fork mit der größeren Kettenlänge durch, da anzunehmen ist, dass hinter diesem die Mehrheit der Teilnehmer steht.

Nach Ausführungsformen wird die Blockchainstruktur demgegenüber beispielsweise in Form einer privaten Blockchain implementiert, wobei nur eine ausgewählte Gruppe von Teilnehmern eine Berechtigung zum Hinzufügen gültiger Blöcke besitzt. Eine entsprechende Berechtigung hat beispielsweise derjenige, der Zugriff auf die blockunabhängige bidirektionale Verkettungsfunktion besitzt.

Nach Ausführungsformen kann zusätzlich ein Konsens als weiter Voraussetzung für ein Hinzufügen eines zusätzlichen Blocks implementiert sein. So kann etwa ein Konsens erreicht werden, indem über eine Aufnahme eines vorgeschlagenen Blocks bzw. vorgeschlagener Einträge des Blocks in die Blockchain abgestimmt wird. Beispielsweise führt jeder Teilnehmer eine eindeutige Liste anderer Teilnehmer, welchen er als Gruppe vertraut. Jeder Teilnehmer kann neue Einträge vorschlagen, die in einen neuen Block der Blockchain aufgenommen werden sollen. Über die Aufnahme und damit die Anerkennung der Gültigkeit der vorgeschlagenen Einträge wird abgestimmt. So stimmt beispielsweise jeder Teilnehmer nur über diejenigen Vorschläge ab, welche von Teilnehmer seiner Liste stammen. Mit anderen Worten werden für die Entscheidung, ob ein Vorschlag für einen neuen Eintrag als gültig anerkannt wird, d.h. ob bezüglich der Gültigkeit dieses Eintrages ein Konsens zwischen den Teilnehmern besteht, nur die Stimmen derjenigen Teilnehmer berücksichtig, die von der Liste desjenigen Teilnehmers umfasst sind, der den entsprechenden Vorschlag macht. Damit ein Vorschlag für einen Eintrag als gültig angenommen wird, muss ein bestimmter Minimumanteil an stimmberechtigten Teilnehmern mit Ja stimmen, beispielsweise 80%. Alle vorgeschlagenen Einträge, die dieses Kriterium erfüllen werden in die Blockchain aufgenommen. Eine solche Abstimmung kann mehrere Runden umfassen. Alle anderen Vorschläge, die das zuvor genannte Kriterium nicht erfüllen, werden verworfen oder bei der Abstimmung über den nächsten Block der Blockchain erneut zur Abstimmung gestellt. Die zuvor genannten Listen stellen Untergruppen des Blockchain-Netzwerks dar, denen der Teilnehmer, welcher die jeweilige Liste führt, als Gruppe insgesamt traut, ohne dass dies erfordert, dass er jedem einzelnen Teilnehmer der Liste traut. Ein Beispiel für ein solches Konsensverfahren bietet der Ripple Protokoll Konsens Algorithmus (David Schwartz et al.: "The Ripple Protocol Consensus Algorithm", Ripple Labs Inc., 2014, https://ripple.com/files/ripple_consensus_whitepaper.pdf).

Unter einer bidirektionalen Verkettung zweier Blöcken wird hier eine Transformation beider Blöcke verstanden, wobei die Transformation von Dateninhalten beider Blöcke abhängt, sodass die Transformationsergebnisse der Blöcke Paare bilden welche gegenseitig voneinander abhängig sind. Wird der Dateninhalt eines der beiden Blöcke geändert, so ändert sich automatisch auch das Transformationsergebnis des zweiten Blocks. Demgegenüber wird unter einer unidirektional zweier Blöcke eine Transformation eines der beiden Blöcke verstanden, wobei die Transformation vom Dateninhalten des nicht transformierten Blocks abhängt, sodass auch das Transformationsergebnisse vom Dateninhalten des nicht transformierten Blocks abhängt. Wird der Dateninhalt des zu transformierenden Blocks geändert, so hat dies keinen Einfluss auf den nicht transformierten Block.

Unter einer Verkettungsfunktion wird hier allgemein eine Transformationsfunktion verstanden, welche dazu konfiguriert ist, den Dateninhalt eines ersten Blocks in Abhängigkeit von dem Dateninhalt eines zweiten Blocks zu transformieren, sodass das Transformationsergebnis von dem Dateninhalt des zweiten Blocks abhängig ist.

Unter einem Chiffrat wird hier ein Geheimtext verstanden, welcher durch eine Transformation derart verändert wurde, dass es nicht mehr möglich ist, dessen Inhalt zu verstehen. Bei einer solchen Transformation, welche in einem Chiffrat resultiert kann es sich beispielsweise um eine Verschlüsselung oder eine Obfuskation handeln.

Die Verwendung von Ordinalzahlen wie erstes, zweites, drittes etc. dient hier, soweit sich aus dem konkreten Zusammenhang nicht eindeutig etwas anderes ergibt, allein der Unterscheidung voneinander verschiedener Elemente und soll keine bestimmte Reihenfolge implizieren.

Ausführungsformen können den Vorteil haben, dass anhand der bidirektionalen Verkettung nicht nur geprüft werden kann, ob einer der vorangehenden Blöcke in der Kette manipuliert wurde, sondern auch ob der nachfolgende Block authentisch ist. Ferner kann geprüft werden, ob nachfolgende Blöcke weggelassen bzw. die Blockchain gekürzt wurde. Ferner kann sichergestellt werden, dass die von dem Chiffrat umfasst Informationen, d.h. die von dem zusätzlichen Block umfassten Daten, vor unberechtigten Zugriffen gesichert sind. Nur wer über die notwendigen Informationen für eine Rücktransformation des Chiffrats in den Ausgangstext verfügt kann auf die Daten zugreifen. Ohne diese Informationen sind die entsprechenden Daten aus dem Chiffrat nicht oder nur mit sehr großem Aufwand ableitbar.

Nach Ausführungsformen umfasst die Transformationen unter Verwendung der ersten blockabhängigen bidirektionalen Verkettungsfunktion jeweils eine Verschlüsselung der Blöcke.

Unter Verschlüsselung wird hier allgemein ein Transformationsverfahren verstanden bei dem ein Ausgangtext, z.B. ein Klartext oder ein erstes Chiffrat, reversibel in ein zweites Chiffrat umgewandelt bzw. cheffriert wird. Das resultierende Chiffrat umfasst zwar den vollständigen Informationsgehalt des Ausgangstextes, nicht jedoch den Ausgangstext selbst. Die Transformationsfunktion zum Verschlüsseln des Ausgangtexts, hier auch als Verkettungsfunktion bezeichnet, stellt somit einen ersten Schlüssel eines asymmetrischen Verschlüsselungsverfahrens dar. Das zweite Chiffrat kann durch Anwenden einer inversen Transformation unter Verwendung einer inversen Transformationsfunktion bzw. inversen Verkettungsfunktion wieder zurück in den Ausgangstext transformiert bzw. dechiffriert werden. Die inverse Transformationsfunktion stellt somit einen zweiten Schlüssel des asymmetrischen Verschlüsselungsverfahrens dar. Nach Ausführungsformen ist die Transformationsfunktion aus der inversen Transformation nicht oder nur mit sehr großem Aufwand ableitbar. Dasselbe gilt nach Ausführungsformen auch für eine Ableitung der inversen Transformationsfunktion aus der Transformationsfunktion.

Ausführungsformen können den Vorteil haben, dass sie eine effiziente und effektive Sicherung von Daten, die in der Blockchainstruktur gespeichert werden, gegen unberechtigte Zugriffe ermöglichen.

Nach Ausführungsformen umfasst die Transformation des unter Verwendung der ersten blockabhängigen bidirektionalen Verkettungsfunktion jeweils eine Obfuskation der Blöcke.

Unter Obfuskation wird hier allgemein ein Transformationsverfahren verstanden bei dem ein Ausgangtext, z.B. ein Klartext oder ein erstes Chiffrat, reversibel in ein zweites Chiffrat umgewandelt bzw. cheffriert wird. Das resultierende Chiffrat umfasst sowohl den vollständigen Informationsgehalt des Ausgangstextes als auch den Ausgangstext selbst. Die Transformationsfunktion zum Obfuskieren, hier auch als Verkettungsfunktion bezeichnet, fügt nach Ausführungsformen beispielsweise zusätzliche Bits und/oder Bytes in den Ausgangstext ein. Beispielsweise erfolgt das Einfügen unter Verwendung eines pseudo-zufallsverteilten Musters. Somit benötigt man Informationen darüber, welche Elemente des Chiffrats zum Ausgangstext gehören und welche im Zuge der Obfuskation hinzugefügt wurden. Fehlen diese Informationen können die Daten des Ausgangstextes nicht oder nur mit sehr großem Aufwand ableitet werden. Diese Informationen können beispielsweise in Form einer inversen Transformationsfunktion bzw. inversen Verkettungsfunktion bereitgestellt werden. Durch Anwenden einer inversen Transformation unter Verwendung der inversen Transformationsfunktion kann das zweite Chiffrat wieder zurück in den Ausgangstext transformiert bzw. dechiffriert werden. Nach Ausführungsformen ist die Transformationsfunktion aus der inversen Transformation nicht oder nur mit sehr großem Aufwand ableitbar. Dasselbe gilt nach Ausführungsformen auch für eine Ableitung der inversen Transformationsfunktion aus der Transformationsfunktion.

Ausführungsformen können den Vorteil haben, dass sie eine effiziente und effektive Sicherung von Daten, die in der Blockchainstruktur gespeichert werden, gegen unberechtigte Zugriffe ermöglichen.

Nach Ausführungsformen handelt es sich bei dem letzten Block der Blockchainstruktur um ein drittes Chiffrat, welches aus einem Klartext unter Verwendung einer zweiten blockabhängigen bidirektionalen Verkettungsfunktion erzeugt wurde, wobei die zweite blockabhängige bidirektionale Verkettungsfunktion paarweise sowohl von dem vorletzten Block der Blockchainstruktur als auch von dem letzten Block der Blockchainstruktur abhängig ist.

Ausführungsformen können den Vorteil haben, dass der letzte Block der Blockchainstruktur, welcher nach dem hinzufügen des zusätzlichen Blocks zum vorletzten Block der Blockchainstruktur wird ebenso wie alle weiteren inneren Blöcke der Blockchainstruktur sowohl von dem vorausgehenden als auch von dem nachfolgenden Block abhängig ist. Mithin wird die Manipulationssicherheit der Daten, welche der letzte Block bzw. die anderen inneren Blöcke umfassen erhöht. Ferner sind zum Dechiffrieren des letzten Blocks bzw. die anderen inneren Blöcke jeweils Kenntnisse sowohl des vorausgehenden als auch des nachfolgenden Blocks notwendig. Dadurch kann die Sicherheit der Daten gegenüber unerlaubten Zugriffen weiter erhöht werden.

Nach Ausführungsformen umfasst das Verfahren zum Zugreifen auf die in dem zusätzlichen Block gespeicherten Daten und/oder zur Prüfung der Gültigkeit der bidirektionalen Verkettung des letzten Blocks mit dem zusätzlichen Block ferner:
- Bereitstellen einer inversen blockunabhängigen Verkettungsfunktion,
- Erzeugen einer ersten inversen blockabhängigen bidirektionalen Verkettungsfunktion aus der inversen blockunabhängigen Verkettungsfunktion, wobei für die Erzeugung ein Dateninhalt des ersten Chiffrats als ein erster Parameter und ein Dateninhalt des zweiten Chiffrats als ein zweiter Parameter der inversen blockunabhängigen Verkettungsfunktion verwendet werden, sodass die erzeugte erste inverse blockabhängige bidirektionale Verkettungsfunktion paarweise sowohl von dem ersten Chiffrat als auch von dem zweiten Chiffrat abhängig ist,
- Dechiffrieren des zweiten Chiffrats, wobei das Dechiffrieren ein Rücktransformieren des zweiten Chiffrats in den zusätzlichen Block unter Verwendung der ersten inversen blockabhängigen bidirektionalen Verkettungsfunktion umfasst.

Ausführungsformen können den Vorteil haben, dass in effektiver und effizienter Weise sowohl ein Zugriff auf die in dem zusätzlichen Block gespeicherten Daten als auch eine Prüfung der Gültigkeit der bidirektionalen Verkettung des letzten Blocks mit dem zusätzlichen Block ermöglicht wird. Ergibt sich aus dem Dechiffrieren des zweiten Chiffrats ein sinnvolles Ergebnis, so ist die Verkettung gültig. Zugleich kann auf das Ergebnis der Dechiffrierung, d.h. den Klartext des zusätzlichen Blocks und damit auf seine Daten zugegriffen werden.

Nach Ausführungsformen handelt es sich bei dem vorletzten Block der Blockchain um ein viertes Chiffrat, welches aus einem fünften Chiffrat unter Verwendung der zweiten blockabhängigen bidirektionalen Verkettungsfunktion erzeugt wurde, wobei das Verfahren zum Zugreifen auf die in dem letzten Block gespeicherten Daten und/oder zur Prüfung der Gültigkeit der bidirektionalen Verkettung des letzten Blocks mit dem zusätzlichen Block ferner umfasst:
- Dechiffrieren des ersten Chiffrats, wobei das Dechiffrieren ein Rücktransformieren des ersten Chiffrats in das dritte Chiffrat unter Verwendung der ersten inversen blockabhängigen bidirektionalen Verkettungsfunktion umfasst,
- Erzeugen einer zweiten inversen blockabhängigen bidirektionalen Verkettungsfunktion aus der inversen blockunabhängigen Verkettungsfunktion, wobei für die Erzeugung ein Dateninhalt des vierten Chiffrats als ein erster Parameter und ein Dateninhalt des dritten Chiffrats als ein zweiter Parameter der inversen blockunabhängigen Verkettungsfunktion verwendet werden, sodass die erzeugte zweite inverse blockabhängige bidirektionale Verkettungsfunktion paarweise sowohl von dem dritten Chiffrat als auch von dem vierten Chiffrat abhängig ist,
- Dechiffrieren des dritten Chiffrats, wobei das Dechiffrieren eine Rücktransformieren des dritten Chiffrats in den Klartext des letzten Blocks unter Verwendung der zweiten inversen blockabhängigen bidirektionalen Verkettungsfunktion umfasst.

Ausführungsformen können den Vorteil haben, dass in effektiver und effizienter Weise sowohl ein Zugriff auf die in dem letzten Block der Blockchainstruktur bzw. in dem vorletzten Block der um den zusätzlichen Block erweiterten Blockchainstruktur gespeicherten Daten als auch eine Prüfung der Gültigkeit der bidirektionalen Verkettung des letzten Blocks mit dem zusätzlichen Block ermöglicht wird. Ergibt sich aus dem Dechiffrieren des ersten und dritten Chiffrats ein sinnvolles Ergebnis, so ist die Verkettung gültig. Zugleich kann auf das Ergebnis der Dechiffrierung, d.h. den Klartext des zusätzlichen Blocks und damit auf seine Daten zugegriffen werden.

Nach Ausführungsformen umfasst das Verfahren ferner ein Erstellen einer verkürzten Kopie der bidirektional verketteten Blockchainstruktur, wobei in der verkürzten Kopie zumindest ein inneres Kettensegment der Blockchainstruktur zwischen einem ersten Block und einem zweiten Block der Blockchainstruktur durch eine Prüffunktion ersetzt wird, wobei die Prüffunktion eine Kombination aller inversen blockabhängigen bidirektionalen Verkettungsfunktionen umfasst, welche paarweise von Blöcken des inneren Kettensegments abhängig sind.

Ausführungsformen können den Vorteil haben, dass es nicht die gesamte Blockchainstruktur, sondern nur ein verkürzter Teil verwendet bzw. weitergegeben wird. Durch Verwenden einer verkürzten Kopie kann Speicherplatz gespart werden. Ferner ermöglicht eine selektive Herausnahme eines oder mehrere innerer Kettensegmente eine Weitergabe von Blöcken mit sicherheitskritischen Daten selektiv zu unterbinden, vergleichbar dem Schwärzen eines Textes. Aus der unterschiedlichen Chiffrierung des ersten und zweiten Blocks ist leicht erkennbar, dass Blöcke aus der Blockchain herausgenommen wurden. Zugleich ermöglich es die Prüffunktion bei Vorlage der herausgenommenen Blöcke zu prüfen, ob es sich bei den vorgelegten Blöcken tatsächlich um die herausgenommenen Blöcke handelt.

Nach Ausführungsformen ermöglicht es die Prüffunktion zudem die Blöcke der verkürzten Kopie der Blockchainstruktur zu dechiffrieren und deren Daten zugänglich zu machen.

Nach Ausführungsformen umfasst das Erstellen der verkürzten Kopie der bidirektional verketteten Blockchainstruktur ein Ersetzen einer Mehrzahl von inneren Kettensegment der Blockchainstruktur jeweils durch eine kettensegmentindividuelle Prüffunktion.

Nach Ausführungsformen umfasst das entfernte innere Kettensegment eine Mehrzahl von Blöcken der bidirektional verketteten Blockchainstruktur. Ausführungsformen können den Vorteil haben, dass sie eine effektive Verkürzung der Blockchainstruktur ermöglichen.

Nach Ausführungsformen umfasst das Verfahren ferner:
- Bereitstellen der Blöcke des ersetzten inneren Kettensegments,
- Prüfen der Authentizität und/oder Vollständigkeit der bereitgestellten Blöcke des ersetzten inneren Kettensegments, wobei die Prüfung einen Vergleich der Prüffunktion mit inversen blockabhängigen bidirektionalen Verkettungsfunktionen umfasst, welche unter Verwendung der inversen blockunabhängigen Verkettungsfunktion für die Blöcke des ersetzten inneren Kettensegments berechnet werden.

Ausführungsformen können den Vorteil haben, dass in effizienter Weise geprüft werden kann, ob die bereitgestellten Blöcke tatsächlich die Blöcke des ersetzten inneren Kettensegments sind.

Nach Ausführungsformen wird, auf eine erfolgreiche Prüfung der Authentizität und/oder Vollständigkeit der bereitgestellten Blöcke des ersetzten inneren Kettensegments hin, die verkürzten Kopie der bidirektional verketteten Blockchainstruktur zur vollständigen bidirektional verketteten Blockchainstruktur ergänzt wird, wobei die Ergänzung ein Ersetzen der Prüffunktion durch die bereitgestellten Blöcke des inneren Kettensegments umfasst.

Ausführungsformen können den Vorteil haben, dass in effizienter Weise die vollständige Blockchainstruktur wiederhergestellt werden kann bzw. ein oder mehrere Lücken durch die Herausnahme von inneren Kettensegmenten geschlossen werden können.

Ausführungsformen umfassen ein Computersystem zum manipulationssicheren Speichern von Daten in einer bidirektional verketteten Blockchainstruktur, wobei in einem Speicher des Computersystems die bidirektional verketteten Blockchainstruktur gespeichert ist, wobei in einem geschützten Speicherbereich des Speichers eine blockunabhängige Verkettungsfunktion gespeichert ist, wobei das Computersystem ferner einen Prozessor umfasst, wobei der Prozessor dazu konfiguriert ist, durch Ausführen von Programminstruktionen (204) das Computersystem (200) zu steuern:
- einen zusätzlichen Block für die Blockchainstruktur zu erzeugen, welcher die zu speichernden Daten umfasst,
- eine erste blockabhängige bidirektionale Verkettungsfunktion aus der blockunabhängigen Verkettungsfunktion zu erzeugen, wobei für die Erzeugung ein Dateninhalt des letzten Blocks der Blockchainstruktur als ein erster Parameter und ein Dateninhalt des zusätzlichen Blocks für die Blockchainstruktur als ein zweiter Parameter der blockunabhängigen Verkettungsfunktion verwendet werden, sodass die erzeugte ersten blockabhängigen bidirektionalen Verkettungsfunktion paarweise sowohl von dem letzten Block der Blockchainstruktur als auch von dem zusätzlichen Block für die Blockchainstruktur abhängig ist,
- den letzten Block der Blockchainstruktur mit dem zusätzlichen Block für die Blockchainstruktur bidirektional zu Verketten, wobei das bidirektionales Verketten ein Transformieren des letzten Blocks der Blockchainstruktur in ein erstes Chiffrat unter Verwendung der ersten blockabhängigen bidirektionalen Verkettungsfunktion und Transformieren des zusätzlichen Blocks für die Blockchainstruktur unter Verwendung der ersten blockabhängigen bidirektionalen Verkettungsfunktion in ein zweites Chiffrat umfasst,
- die resultierende erweiterte Blockchainstruktur in dem Speicher zu speichern, wobei das Speichern ein Ersetzen des letzten Blocks der Blockchainstruktur durch das erste Chiffrat und ein Hinzufügen des zweiten Chiffrats zu der Blockchainstruktur umfasst.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarere Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "geschützten Speicherbereich" wird hier ein Bereich eines elektronischen Speichers verstanden, auf den ein Zugriff, das heißt ein Lesezugriff oder ein Schreibzugriff, nur über einen zugeordneten Prozessor des betreffenden Computersystems möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Asymmetrische Verschlüsselung wird für eine Vielzahl von Kryptosystemen eingesetzt und spielt auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Dienstanbieter, weitergegeben werden darf sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen. Eine mit einem privaten Schlüssel erstellte Signatur kann mit dem zugehörigen öffentlichen Schlüssel verifiziert werden.

Im Weiteren werden Ausführungsformen der Erfindung mit Bezugnahme auf die Zeichnungen näher erläutert. Es zeigen:
- Figuren 1: schematische Blockdiagramme von Ausführungsformen exemplarischer Blockchainstrukturen,
- Figur 2: ein schematisches Blockdiagramm einer Ausführungsform eines exemplarischen Computersystems,
- Figur 3: ein schematisches Flussdiagramm einer ersten Ausführungsform eines exemplarischen Verfahrens,
- Figur 4: ein schematisches Flussdiagramm einer zweiten Ausführungsform eines exemplarischen Verfahrens,
- Figur 5: ein schematisches Flussdiagramm einer dritten Ausführungsform eines exemplarischen Verfahrens,
- Figur 6: ein schematisches Flussdiagramm einer vierten Ausführungsform eines exemplarischen Verfahrens, und
- Figur 7: ein schematisches Flussdiagramm einer fünften Ausführungsform eines exemplarischen Verfahrens.

Elemente der nachfolgenden Ausführungsformen, die einander entsprechen, werden mit denselben Bezugszeichen gekennzeichnet.

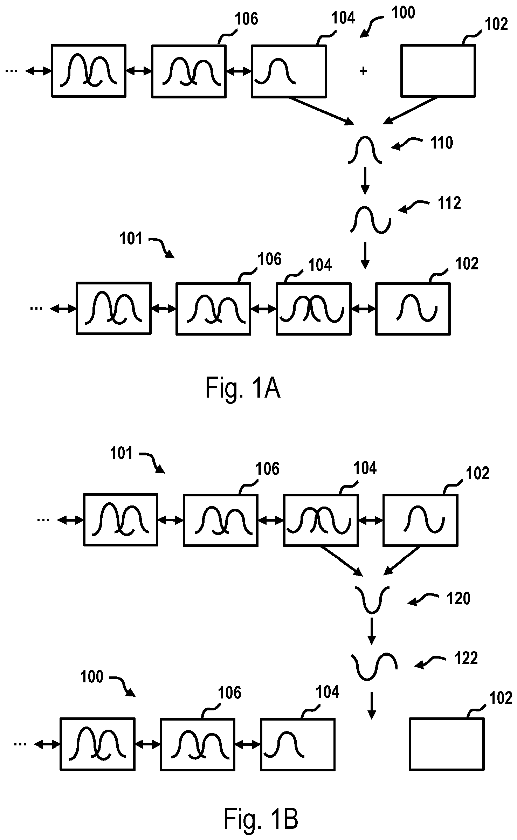

Figuren 1A bis 1C zeigen Ausführungsformen exemplarischer Blockchainstrukturen 100, 101, 103. Figur 1A zeigt eine bidirektional verketteten Blockchainstruktur 100, welche um einen zusätzlichen Block 102 erweitert werden soll. Die inneren Blöcke der bidirektional verketteten Blockchainstruktur 100, wie beispielsweise der vorletzte Block 106 sind durch eine zweifache Chiffrierung, schematisch angedeutet durch die beiden überlappenden Funktionen, sowohl von dem jeweils unmittelbar vorangehenden Block als auch von dem unmittelbar nachfolgenden Block abhängig.

Zur bidirektionalen Verkettung des letzten Blocks 104 der Blockchainstruktur 100 mit dem zusätzlichen Block 102 wird eine blockunabhängigen Verkettungsfunktion 110 bereitgestellt. Aus der blockunabhängigen Verkettungsfunktion 110 wird eine blockabhängige bidirektionale Verkettungsfunktion 112 erzeugt. Für die Erzeugung der blockabhängigen bidirektionalen Verkettungsfunktion 112 werden ein Dateninhalt des letzten Blocks 104 der Blockchainstruktur 100 als ein erster Parameter und ein Dateninhalt des zusätzlichen Blocks 102 als ein zweiter Parameter der blockunabhängigen Verkettungsfunktion 110 verwendet. Die so erzeugte blockabhängige bidirektionale Verkettungsfunktion 112 ist paarweise sowohl von dem letzten Block 104 der Blockchainstruktur 100 als auch von dem zusätzlichen Block 102 abhängig.

Durch ein Transformieren des letzten Blocks 104 der Blockchainstruktur 100 in ein erstes Chiffrat und ein Transformieren des zusätzlichen Blocks 102 in ein zweites Chiffrat erfolgt ein unter bidirektionales Verketten letzten Blocks 104 der Blockchainstruktur 100 mit dem zusätzlichen Block 102. Die Transformationen werden jeweils unter Verwendung der blockabhängigen bidirektionalen Verkettungsfunktion 112 ausgeführt. Die Bidirektionalität der Verkettung beruht auf der Tatsache, dass die Transformation des letzten Blocks 104 der Blockchainstruktur 100 vom Dateninhalt des zusätzlichen Blocks 102 abhängig ist, welcher als zweiter Parameter der blockunabhängigen Verkettungsfunktion 110 verwendet wird. Ferner ist die Transformation des zusätzlichen Blocks 102 vom Dateninhalt des letzten Blocks 104 der Blockchainstruktur 100 abhängig, welcher als erster Parameter der blockunabhängigen Verkettungsfunktion 110 verwendet wird.

In Figur 1B wird der chiffrierte Block 102 wieder dechiffriert, um die darin enthaltenen Daten lesen und verwenden zu können. Hierzu wird die Verkettung mit dem Block 104 über die gemeinsame Chiffrierung durch die blockabhängige bidirektionale Verkettungsfunktion 112 wieder gelöst. Mit anderen Worten wird der Block 102 aus der erweiterten bidirektional verketteten Blockchainstruktur 101 herausgelöst. Zu diesem Zweck wird eine zu der blockunabhängigen Verkettungsfunktion 110 inverse blockunabhängige Verkettungsfunktion 120 bereitgestellt. Aus der inversen blockunabhängigen Verkettungsfunktion 120 wird eine zu der blockabhängigen bidirektionalen Verkettungsfunktion 112 inverse blockabhängige bidirektionale Verkettungsfunktion 122 erzeugt. Dabei werden ein Dateninhalt des chiffrierten Blocks 104 als ein erster Parameter und ein Dateninhalt des chiffrierten Blocks 102 als ein zweiter Parameter der inversen blockunabhängigen Verkettungsfunktion 120 verwendet. Die so erzeugte inverse blockabhängige bidirektionale Verkettungsfunktion 122 ist paarweise sowohl von dem chiffrierten Blocks 104 als auch von dem chiffrierten Blocks 102 abhängig. Die Dechiffrierung der beiden chiffrierten Blöcke 102, 104 ist nur erfolgreich, wenn beide Blöcke 102, 104 mit derselben blockabhängige bidirektionale Verkettungsfunktion 112 chiffriert, d.h. bidirektional verkettet wurden.

Unter Verwendung der inverse blockabhängige bidirektionale Verkettungsfunktion 122 wird der chiffrierte Block 102 durch ein Rücktransformieren in seine Ausgangsform umgewandelt, welche die Daten im Klartext umfasst.

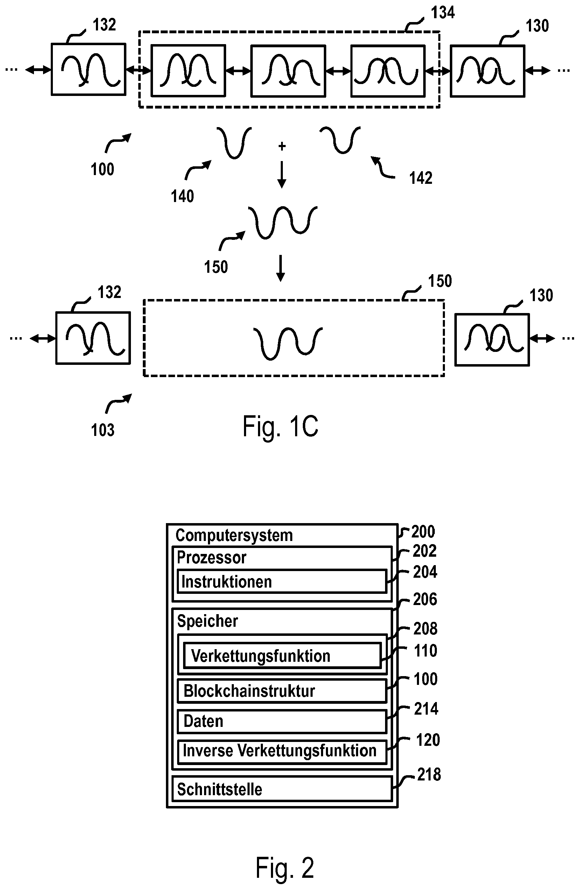

Figur 1C zeigt eine bidirektional verketteten Blockchainstruktur 100 von der eine verkürzte Kopie 103 erstellt wird. Hierzu wird ein inneres Kettensegment 134 zwischen den Blöcken 132 und 130 herausgenommen. Da die Chiffrierungen der Blöcke 132, 130 durch keine gemeinsame inverse blockabhängige bidirektionale Verkettungsfunktion 122 rücktransformiert werden kann, welche allein von Dateninhalten der Blöcke 132, 130 abhängt, ist leicht ersichtlich, dass Blöcke herausgenommen wurden und die verkürzte Kopie 103 nicht der vollständigen Blockchainstruktur entspricht. Durch Kombination der inversen blockabhängigen bidirektionalen Verkettungsfunktionen 140, 142 zwischen den Blöcken des inneren Kettensegments 134 wird die Prüffunktion 150 erzeugt. Das Kombinieren der kann beispielsweise ein Multiplizieren, Dividieren, Addieren und/oder Subtrahieren der inversen blockabhängigen bidirektionalen Verkettungsfunktionen 140, 142 umfassen. Werden beispielsweise die herausgenommenen Blöcke des inneren Kettensegments 134 zur Ergänzung der verkürzte Kopie 103 bereitgestellt, kann anhand der Prüffunktion 150 geprüft werden, ob es sich bei den bereitgestellten Blöcken tatsächlich um die authentischen und vollständigen herausgenommenen Blöcke handelt oder ob diese manipuliert wurde.

Figur 2 zeigt eine Ausführungsform eines exemplarischen Computersystems 200 zum Ausführen eines Verfahrens zum manipulationssicheren Speichern von Daten 214 in einer bidirektional verketteten Blockchainstruktur 100. Das Computersystems 200 umfasst einen Prozessor 202, welcher dazu konfiguriert ist, Programminstruktionen 204 auszuführen. Durch Ausführen der Programminstruktionen 204 steuert der Prozessor 202 das Computersystem 200 so, dass es eine der zuvor beschriebenen Ausführungsformen des Verfahren zum manipulationssicheren Speichern der Daten 214 in der bidirektional verketteten Blockchainstruktur 100 ausführt.

Das Computersystems 200 umfasst ferner einen Speicher 206, in welchem eine bidirektional verketteten Blockchainstruktur 100 gespeichert ist, zu welcher die Daten 214 in Form eines zusätzlichen Blocks hinzugefügt und damit manipulationssicher gespeichert werden sollen. In einem geschützten Speicherbereich 208 des Speichers 206 ist zudem die blockunabhängige Verkettungsfunktion 110 gespeichert, aus welcher die blockabhängigen bidirektionale Verkettungsfunktionen 112 durch Ausführen der Programminstruktionen 204 erzeugt werden können. Nur wer im Besitz blockunabhängige Verkettungsfunktion 110 ist kann zusätzliche Blöcke zu der bidirektional verketteten Blockchainstruktur 100 hinzufügen. Zum Auslesen von Daten, welche in den Blöcken der Blockchainstruktur 100 in chiffrierter Form gespeichert sind, umfasst der Speicher 206 zudem die inverse blockunabhängige Verkettungsfunktion 120, aus welcher sich inverse blockabhängige bidirektionale Verkettungsfunktionen 122 erzeugen lassen.

Schließlich umfasst das Computersystem 200 noch eine Kommunikationsschnittstelle 218. Bei dieser Kommunikationsschnittstelle 218 kann es sich beispielsweise um eine Netzwerkschnittstelle zur Kommunikation über ein Netzwerk oder über eine Nutzerschnittstelle zur Eingabe von Befehlen durch einen Nutzer und zur Ausgabe von Ergebnissen handeln.

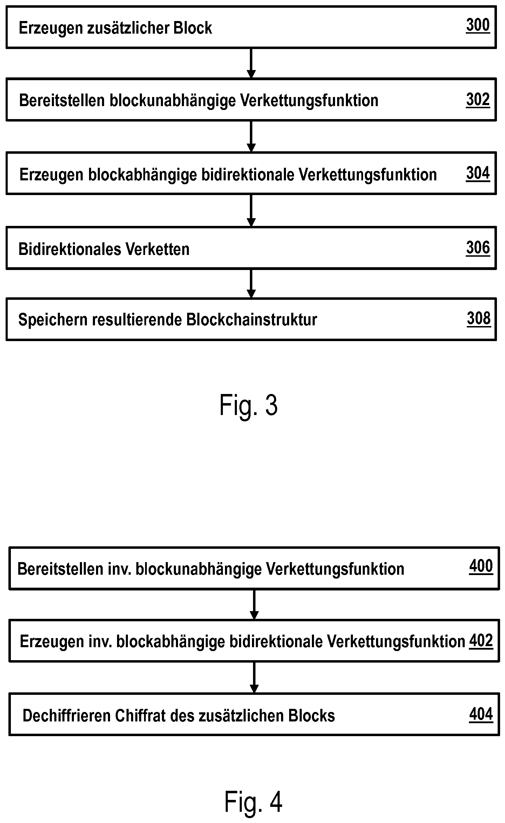

Figur 3 zeigt eine Ausführungsform eines exemplarischen Verfahrens zum manipulationssicheren Speichern von Daten in einer bidirektional verketteten Blockchainstruktur. In Schritt 300 wird ein zusätzlicher Block mit den in der bidirektional verketteten Blockchainstruktur zu speichernden Daten erzeugt. In Schritt 302 wird eine der Blockchainstruktur zugeordnete blockunabhängige Verkettungsfunktion bereitgestellt. In Schritt 304 wird aus der blockunabhängige Verkettungsfunktion unter Verwendung von Dateninhalten des zusätzlichen Blocks sowie des Blocks der Blockchainstruktur, mit welchem der zusätzliche Block bidirektional verkettet werden soll, eine blockabhängige bidirektionale Verkettungsfunktion erzeugt. In Schritt 306 wird der zusätzliche Block mit dem entsprechenden Block der Blockchainstruktur bidirektional verkettet. Hierzu werden beide Blöcke mit der blockabhängigen bidirektionalen Verkettungsfunktion chiffriert. In Schritt 308 wird die resultierende Blockchainstruktur, welche um den zusätzlichen Block erweitert wurde, gespeichert.

Figur 4 zeigt eine Ausführungsform eines exemplarischen Verfahrens zum Zugreifen auf Daten, welche manipulationssicher in einer bidirektional verketteten Blockchainstruktur gespeichert sind. In Schritt 400 wird eine inverse blockunabhängige Verkettungsfunktion bereitgestellt. In Schritt 402 wird unter Verwendung von Dateninhalten des zusätzlichen Blocks und des Blocks, mit welchem der zusätzliche Block verkettet wurde, aus der bereitgestellten inversen blockunabhängigen Verkettungsfunktion eine inverse blockabhängige bidirektionale Verkettungsfunktion erzeugt. Mit dieser inversen blockabhängigen bidirektionalen Verkettungsfunktion kann die Transformation bzw. Chiffrierung des zusätzlichen Blocks aus Figur 3 wieder rückgängig gemacht werden. In Schritt 404 wird der chiffrierte zusätzliche Block unter Verwendung der inversen blockabhängigen bidirektionalen Verkettungsfunktion dechiffriert.

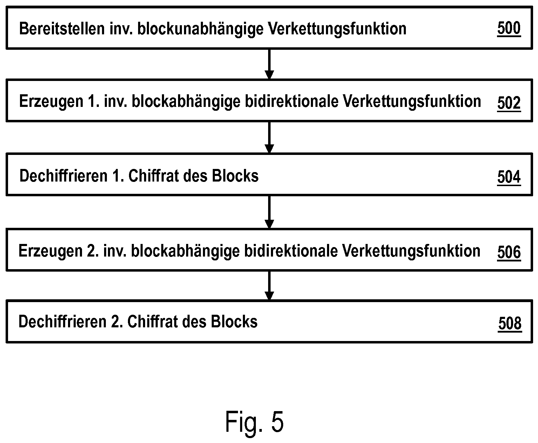

Figur 5 zeigt eine weitere Ausführungsform eines exemplarischen Verfahrens zum Zugreifen auf Daten, welche manipulationssicher in einer bidirektional verketteten Blockchainstruktur gespeichert sind. In Schritt 500 inverse blockunabhängige Verkettungsfunktion bereitgestellt. In Schritt 502 wird aus der inversen blockunabhängigen Verkettungsfunktion eine erste inverse blockabhängige bidirektionale Verkettungsfunktion erzeugt, welche von inneren Block der bidirektional verketteten Blockchainstruktur und einem direkt nachfolgenden Block abhängig ist, mit welchem der innere Block bidirektional verkettet ist. In Schritt 504 wird eine erste Chiffrierung des inneren Blocks unter Verwendung der ersten inversen blockabhängigen bidirektionalen Verkettungsfunktion dechiffriert. In Schritt 506 wird aus der inversen blockunabhängigen Verkettungsfunktion eine zweite inverse blockabhängige bidirektionale Verkettungsfunktion erzeugt, welche von einmal dechiffrierten inneren Block der bidirektional verketteten Blockchainstruktur und einem direkt vorangehenden Block abhängig ist, mit welchem der innere Block bidirektional verkettet ist.
In Schritt 508 wird eine zweite Chiffrierung des inneren Blocks unter Verwendung der ersten inversen blockabhängigen bidirektionalen Verkettungsfunktion dechiffriert. Als Ergebnis werden die von dem inneren Block umfassten Daten im Klartext erhalten.

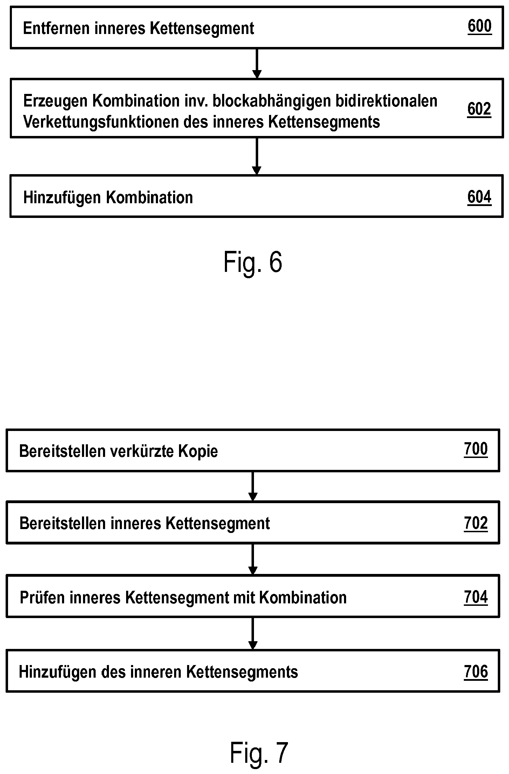

Figur 6 zeigt eine Ausführungsform eines exemplarischen Verfahrens zum Erzeugen einer verkürzten Kopie einer bidirektional verketteten Blockchainstruktur. In Schritt 600 werden ein oder mehrere innere Kettensegmente aus der bidirektional verketteten Blockchainstruktur herausgenommen bzw. entfernt. In Schritt 602 werden aus den inversen blockabhängigen bidirektionalen Verkettungsfunktion zwischen den Blöcken der inneren Kettensegmente jeweils kettensegmentspezifischen Kombinationen erzeugt. In Schritt 604 werden die erzeugten jeweils anstelle der herausgenommenen inneren Kettensegmente als Prüffunktionen zu der verkürzten Blockchainstruktur hinzugefügt.

Figur 7 zeigt eine Ausführungsform eines exemplarischen Verfahrens zum Wiederherstellen einer vollständigen bidirektional verketteten Blockchainstruktur aus einer verkürzten Kopie der Blockchainstruktur. In Schritt 700 wird eine verkürzte Kopie einer bidirektional verketteten Blockchainstruktur bereitgestellt. In Schritt 702 werden ein oder mehrere innere Kettensegmente zur Wiederherstellung der Blockchainstruktur bereitgestellt. In Schritt 704 werden die bereitgestellten inneren Kettensegmente durch die von der verkürzten Kopie der bidirektional verketteten Blockchainstruktur umfassten Kombinationen von inversen blockabhängigen bidirektionalen Verkettungsfunktion bzw. Prüffunktionen auf Authentizität und Vollständigkeit geprüft. In Schritt 706 werden die bereitgestellten inneren Kettensegmente zur Wiederherstellung der vollständigen bidirektional verketteten Blockchainstruktur zu der verkürzten Kopie hinzugefügt.

### Bezugszeichenliste

- 100: Blockchainstruktur
- 101: erweiterte Blockchainstruktur
- 102: zusätzlicher Block
- 103: verkürzte Kopie Blockchainstruktur
- 104: letzter Block
- 106: vorletzter Block
- 110: blockunabhängige Verkettungsfunktion
- 112: bidirektionale blockabhängige Verkettungsfunktion
- 120: inverse blockunabhängige Verkettungsfunktion
- 122: inverse bidirektionale blockabhängige Verkettungsfunktion
- 134: inneres Kettensegment
- 140: inverse bidirektionale blockabhängige Verkettungsfunktion
- 142: inverse bidirektionale blockabhängige Verkettungsfunktion
- 150: Kombination inverse bidirektionale blockabhängige Verkettungsfunktionen
- 200: Computersystem
- 202: Prozessor
- 204: Programminstruktionen
- 206: Speicher
- 208: geschützter Speicherbereich
- 214: Daten
- 218: Kommunikationsschnittstelle

## Patentansprüche

1. Verfahren zum manipulationssicheren Speichern von Daten (214) in einer bidirektional verketteten Blockchainstruktur (100, 101), wobei das Verfahren umfasst:
• Erzeugen eines zusätzlichen Blocks (102) für die Blockchainstruktur (100), welcher die zu speichernden Daten (214) umfasst,
• Bereitstellen einer blockunabhängigen Verkettungsfunktion (110),
• Erzeugen einer ersten blockabhängigen bidirektionalen Verkettungsfunktion (112) aus der blockunabhängigen Verkettungsfunktion (110), wobei für die Erzeugung ein Dateninhalt des letzten Blocks (104) der Blockchainstruktur (100) als ein erster Parameter und ein Dateninhalt des zusätzlichen Blocks (102) für die Blockchainstruktur (100) als ein zweiter Parameter der blockunabhängigen Verkettungsfunktion (110) verwendet werden, sodass die erzeugte ersten blockabhängigen bidirektionalen Verkettungsfunktion (112) paarweise sowohl von dem letzten Block (104) der Blockchainstruktur (100) als auch von dem zusätzlichen Block (102) für die Blockchainstruktur (100) abhängig ist,
• bidirektionales Verketten des letzten Blocks (104) der Blockchainstruktur (100) mit dem zusätzlichen Block (102) für die Blockchainstruktur (100), wobei das bidirektionales Verketten ein Transformieren des letzten Blocks (104) der Blockchainstruktur (100) in ein erstes Chiffrat unter Verwendung der ersten blockabhängigen bidirektionalen Verkettungsfunktion (112) und ein Transformieren des zusätzlichen Blocks (102) für die Blockchainstruktur (100) unter Verwendung der ersten blockabhängigen bidirektionalen Verkettungsfunktion (112) in ein zweites Chiffrat umfasst,
• Speichern der resultierenden erweiterten Blockchainstruktur (101), welche das erste und das zweite Chiffrat umfasst.

2. Verfahren nach Anspruch 1, wobei die Transformationen unter Verwendung der ersten blockabhängigen bidirektionalen Verkettungsfunktion (112) jeweils eine Verschlüsselung der Blöcke umfasst.

3. Verfahren nach Anspruch 1, wobei die Transformation des unter Verwendung der ersten blockabhängigen bidirektionalen Verkettungsfunktion (112) jeweils eine Obfuskation der Blöcke umfasst.

4. Verfahren nach einem der vorhergehenden Ansprüche, wobei es sich bei dem letzten Block (104) der Blockchainstruktur (100) um ein drittes Chiffrat handelt, welches aus einem Klartext unter Verwendung einer zweiten blockabhängigen bidirektionalen Verkettungsfunktion erzeugt wurde, wobei die zweite blockabhängige bidirektionale Verkettungsfunktion paarweise sowohl von dem vorletzten Block (106) der Blockchainstruktur (100) als auch von dem letzten Block (104) der Blockchainstruktur (100) abhängig ist.

5. Verfahren nach einem der vorhergehenden Ansprüche, wobei das Verfahren zum Zugreifen auf die in dem zusätzlichen Block (102) gespeicherten Daten (214) und/oder zur Prüfung der Gültigkeit der bidirektionalen Verkettung des letzten Blocks (104) mit dem zusätzlichen Block (102) ferner umfasst:
• Bereitstellen einer inversen blockunabhängigen Verkettungsfunktion (120),
• Erzeugen einer ersten inversen blockabhängigen bidirektionalen Verkettungsfunktion (122) aus der inversen blockunabhängigen Verkettungsfunktion (120), wobei für die Erzeugung ein Dateninhalt des ersten Chiffrats als ein erster Parameter und ein Dateninhalt des zweiten Chiffrats als ein zweiter Parameter der inversen blockunabhängigen Verkettungsfunktion (120) verwendet werden, sodass die erzeugte erste inverse blockabhängige bidirektionale Verkettungsfunktion (122) paarweise sowohl von dem ersten Chiffrat als auch von dem zweiten Chiffrat abhängig ist,
• Dechiffrieren des zweiten Chiffrats, wobei das Dechiffrieren ein Rücktransformieren des zweiten Chiffrats in den zusätzlichen Block (102) unter Verwendung der ersten inversen blockabhängigen bidirektionalen Verkettungsfunktion (122) umfasst.

6. Verfahren nach einem der vorhergehenden Ansprüche, wobei es sich bei dem vorletzten Block (106) der Blockchainstruktur um ein viertes Chiffrat handelt, welches aus einem fünften Chiffrat unter Verwendung der zweiten blockabhängigen bidirektionalen Verkettungsfunktion erzeugt wurde, wobei das Verfahren zum Zugreifen auf die in dem letzten Block (104) gespeicherten Daten (214) und/oder zur Prüfung der Gültigkeit der bidirektionalen Verkettung des letzten Blocks (104) mit dem zusätzlichen Block (102) ferner umfasst:
• Dechiffrieren des ersten Chiffrats, wobei das Dechiffrieren ein Rücktransformieren des ersten Chiffrats in das dritte Chiffrat unter Verwendung der ersten inversen blockabhängigen bidirektionalen Verkettungsfunktion (122) umfasst,
• Erzeugen einer zweiten inversen blockabhängigen bidirektionalen Verkettungsfunktion aus der inversen blockunabhängigen Verkettungsfunktion (120), wobei für die Erzeugung ein Dateninhalt des vierten Chiffrats als ein erster Parameter und ein Dateninhalt des dritten Chiffrats als ein zweiter Parameter der inversen blockunabhängigen Verkettungsfunktion (120) verwendet werden, sodass die erzeugte zweite inverse blockabhängige bidirektionale Verkettungsfunktion paarweise sowohl von dem dritten Chiffrat als auch von dem vierten Chiffrat abhängig ist,
• Dechiffrieren des dritten Chiffrats, wobei das Dechiffrieren eine Rücktransformieren des dritten Chiffrats in den Klartext des letzten Blocks (104) unter Verwendung der zweiten inversen blockabhängigen bidirektionalen Verkettungsfunktion umfasst.

7. Verfahren nach einem der vorangehenden Ansprüche, wobei das Verfahren ferner ein Erstellen einer verkürzten Kopie (103) der bidirektional verketteten Blockchainstruktur (100, 101) umfasst, wobei in der verkürzten Kopie (103) zumindest ein inneres Kettensegment (134) der Blockchainstruktur (100, 101) zwischen einem ersten Block und einem zweiten Block der Blockchainstruktur (100, 101) durch eine Prüffunktion ersetzt wird, wobei die Prüffunktion eine Kombination (150) aller inversen blockabhängigen bidirektionalen Verkettungsfunktionen (140, 142) umfasst, welche paarweise von Blöcken des inneren Kettensegments (134) abhängig sind.

8. Verfahren nach Anspruch 7, wobei das entfernte innere Kettensegment (134) eine Mehrzahl von Blöcken der bidirektional verketteten Blockchainstruktur (100, 101) umfasst.

9. Verfahren nach einem der Ansprüche 7 bis 8, wobei das Verfahren ferner umfasst:
• Bereitstellen der Blöcke des ersetzten inneren Kettensegments (134),
• Prüfen der Authentizität und/oder Vollständigkeit der bereitgestellten Blöcke des ersetzten inneren Kettensegments (134), wobei die Prüfung einen Vergleich der Prüffunktion mit inversen blockabhängigen bidirektionalen Verkettungsfunktionen (140, 142) umfasst, welche unter Verwendung der inversen blockunabhängigen Verkettungsfunktion (120) für die Blöcke des ersetzten inneren Kettensegments (134) berechnet werden.

10. Verfahren nach Anspruch 9, wobei auf eine erfolgreiche Prüfung der Authentizität und/oder Vollständigkeit der bereitgestellten Blöcke des ersetzten inneren Kettensegments (134) hin, die verkürzten Kopie (103) der bidirektional verketteten Blockchainstruktur (100, 101) zur vollständigen bidirektional verketteten Blockchainstruktur (100, 101) ergänzt wird, wobei die Ergänzung ein Ersetzen der Prüffunktion durch die bereitgestellten Blöcke des inneren Kettensegments (134) umfasst.

11. Computersystem (200) zum manipulationssicheren Speichern (206) von Daten (214) in einer bidirektional verketteten Blockchainstruktur (100, 101), wobei in einem Speicher (206) des Computersystems (200) die bidirektional verketteten Blockchainstruktur (100) gespeichert ist, wobei in einem geschützten Speicherbereich (208) des Speichers (206) eine blockunabhängige Verkettungsfunktion (110) gespeichert ist, wobei das Computersystem (200) ferner einen Prozessor (202) umfasst, wobei der Prozessor (202) dazu konfiguriert ist, durch Ausführen von Programminstruktionen (204) das Computersystem (200) zu steuern:
• einen zusätzlichen Block (102) für die Blockchainstruktur (100) zu erzeugen, welcher die zu speichernden Daten (214) umfasst,
• eine erste blockabhängige bidirektionale Verkettungsfunktion (112) aus der blockunabhängigen Verkettungsfunktion (110) zu erzeugen, wobei für die Erzeugung ein Dateninhalt des letzten Blocks (104) der Blockchainstruktur (100) als ein erster Parameter und ein Dateninhalt des zusätzlichen Blocks (102) für die Blockchainstruktur (100) als ein zweiter Parameter der blockunabhängigen Verkettungsfunktion (110) verwendet werden, sodass die erzeugte ersten blockabhängigen bidirektionalen Verkettungsfunktion (112) paarweise sowohl von dem letzten Block (104) der Blockchainstruktur (100) als auch von dem zusätzlichen Block (102) für die Blockchainstruktur (100) abhängig ist,
• den letzten Block (104) der Blockchainstruktur (100) mit dem zusätzlichen Block (102) für die Blockchainstruktur (100) bidirektional zu Verketten, wobei das bidirektionales Verketten ein Transformieren des letzten Blocks (104) der Blockchainstruktur (100) in ein erstes Chiffrat unter Verwendung der ersten blockabhängigen bidirektionalen Verkettungsfunktion (112) und Transformieren des zusätzlichen Blocks (102) für die Blockchainstruktur (100) unter Verwendung der ersten blockabhängigen bidirektionalen Verkettungsfunktion (112) in ein zweites Chiffrat umfasst,
• die resultierende erweitere Blockchainstruktur (101) in dem Speicher (206) zu speichern, wobei das Speichern ein Ersetzen des letzten Blocks (104) der Blockchainstruktur (100) durch das erste Chiffrat und ein Hinzufügen des zweiten Chiffrats zu der Blockchainstruktur (100) umfasst.

## Claims

1. A method for storing data (214) in a tamper-proof manner in a bidirectionally linked blockchain structure (100, 101), the method comprising:
• generating an additional block (102) for the blockchain structure (100), which includes the data (214) to be stored;
• providing a bock-independent linking function (110);
• generating a first block-dependent bidirectional linking function (112) from the block-independent linking function (110), wherein, for the generation, a data content of the last block (104) of the blockchain structure (100) is used as a first parameter, and a data content of the additional block (102) for the blockchain structure (100) is used as a second parameter of the block-independent linking function (110), so that the generated first block-dependent bidirectional linking function (112) is dependent, in pairs, both on the last block (104) of the blockchain structure (100) and on the additional block (102) for the blockchain structure (100);
• bidirectionally linking the last block (104) of the blockchain structure (100) to the additional block (102) for the blockchain structure (100), wherein the bidirectional linking encompasses transforming the last block (104) of the blockchain structure (100) into a first ciphertext, using the first block-dependent bidirectional linking function (112), and transforming the additional block (102) for the blockchain structure (100), using the first block-dependent bidirectional linking function (112) into a second ciphertext; and
• storing the resulting extended blockchain structure (101), which includes the first and second ciphertexts.

2. The method according to claim 1, wherein the transformations using the first block-dependent bidirectional linking functions (112) in each case include an encryption of the blocks.

3. The method according to claim 1, wherein the transformation using the first block-dependent bidirectional linking functions (112) in each case includes an obfuscation of the blocks.

4. A method according to any one of the preceding claims, wherein the last block (104) of the blockchain structure (100) is a third ciphertext, which was generated from plain text, using a second block-dependent bidirectional linking function, the second block-dependent bidirectional linking function being dependent, in pairs, both on the penultimate block (106) of the blockchain structure (100) and on the last block (104) of the blockchain structure (100).

5. A method according to any one of the preceding claims, the method for accessing the data (214) stored in the additional block (102) and/or for checking the validity of the bidirectional concatenation of the last block (104) to the additional block (102) furthermore comprising:
• providing an inverse bock-independent linking function (120);
• generating a first inverse block-dependent bidirectional linking function (122) from the inverse block-independent linking function (120), wherein a data content of the first ciphertext is used as a first parameter, and a data content of the second ciphertext is used as a second parameter, of the inverse block-independent linking function (120) for the generation, so that the generated first inverse block-dependent bidirectional linking function (122) is dependent, in pairs, both on the first ciphertext and on the second ciphertext; and
• decrypting the second ciphertext, wherein the decryption encompasses back-transforming the second ciphertext into the additional block (102), using the first inverse block-dependent bidirectional linking function (122).

6. A method according to any one of the preceding claims, wherein the penultimate block (106) of the blockchain structure is a fourth ciphertext, which was generated from a fifth ciphertext, using the second block-dependent bidirectional linking function, the method for accessing the data (214) stored in the last block (104) and/or for checking the validity of the bidirectional concatenation of the last block (104) to the additional block (102) furthermore comprising:
• decrypting the first ciphertext, wherein the decryption encompasses back-transforming the first ciphertext into the third ciphertext, using the first inverse block-dependent bidirectional linking function (122),
• generating a second inverse block-dependent bidirectional linking function from the inverse block-independent linking function (120), wherein a data content of the fourth ciphertext is used as a first parameter, and a data content of the third ciphertext is used as a second parameter, of the inverse block-independent linking function (120) for the generation, so that the generated second inverse block-dependent bidirectional linking function is dependent, in pairs, both on the third ciphertext and on the fourth ciphertext; and
• decrypting the third ciphertext, wherein the decryption encompasses back-transforming the third ciphertext into the plain text of the last block (104), using the second inverse block-dependent bidirectional linking function.

7. A method according to any one of the preceding claims, wherein the method furthermore comprises creating a shortened copy (103) of the bidirectionally linked blockchain structure (100, 101), in the shortened copy (103) at least one inner chain segment (134) of the blockchain structure (100, 101) between a first block and a second block of the blockchain structure (100, 101) being substituted with a check function, the check function encompassing a combination (150) of all inverse block-dependent bidirectional linking functions (140, 142) which are dependent, in pairs, on blocks of the inner chain segment (134).

8. The method according to claim 7, wherein the removed inner chain segment (134) comprises a plurality of blocks of the bidirectionally linked blockchain structure (100, 101).

9. The method according to either claim 7 or 8, the method furthermore comprising:
• providing the blocks of the substituted inner chain segment (134); and
• checking the authenticity and/or completeness of the provided blocks of the substituted inner chain segment (134), wherein the checking encompasses comparing the check function to inverse block-dependent bidirectional linking functions (140, 142), which are calculated using the inverse block-independent linking function (120) for the blocks of the substituted inner chain segment (134).

10. The method according to claim 9, wherein, in response to a successful check of the authenticity and/or completeness of the provided blocks of the substituted inner chain segment (134), the shortened copy (103) of the bidirectionally linked blockchain structure (100, 101) is supplemented to form a complete bidirectionally linked blockchain structure (100, 101), the supplementation encompassing substituting the check function with the provided blocks of the inner chain segment (134).

11. A computer system (200) for storing (206) data (214) in a tamper-proof manner in a bidirectionally linked blockchain structure (100, 101), the bidirectionally linked blockchain structure (100) being stored in a memory (206) of the computer system (200), a block-independent linking function (110) being stored in a protected memory area (208) of the memory (206), the computer system (200) furthermore comprising a processor (202), the processor (202) being configured, by executing program instructions (204), to control the computer system (200) for:
• generating an additional block (102) for the blockchain structure (100), which includes the data (214) to be stored;
• generating a first block-dependent bidirectional linking function (112) from the block-independent linking function (110), wherein, for the generation, a data content of the last block (104) of the blockchain structure (100) is used as a first parameter, and a data content of the additional block (102) for the blockchain structure (100) is used as a second parameter, of the block-independent linking function (110), so that the generated first block-dependent bidirectional linking function (112) is dependent, in pairs, both on the last block (104) of the blockchain structure (100) and on the additional block (102) for the blockchain structure (100);
• bidirectionally linking the last block (104) of the blockchain structure (100) to the additional block (102) for the blockchain structure (100), wherein the bidirectional linking encompasses transforming the last block (104) of the blockchain structure (100) into a first ciphertext, using the first block-dependent bidirectional linking function (112), and transforming the additional block (102) for the blockchain structure (100), using the first block-dependent bidirectional linking function (112) into a second ciphertext; and
• storing the resulting extended blockchain structure (101) in the memory (206), wherein the storing encompasses substituting the last block (104) of the blockchain structure (100) with the first ciphertext, and adding the second ciphertext to the blockchain structure (100).

## Revendications

1. Procédé permettant le stockage de manière protégée contre des manipulations de données (214) dans une structure de chaîne de blocs (100, 101) concaténée de manière bidirectionnelle, le procédé comprenant :
• la création d'un bloc supplémentaire (102) pour la structure de chaîne de blocs (100), lequel comprend les données (214) à stocker,
• la mise au point d'une fonction de concaténation (110) non dépendante d'un bloc,
• la création d'une première fonction de concaténation (112) bidirectionnelle dépendante d'un bloc à partir de la fonction de concaténation (110) non dépendante d'un bloc, où, pour la création, un contenu de donnée du dernier bloc (104) de la structure de chaîne de blocs (100) est employé en tant que premier paramètre et un contenu de bloc du bloc supplémentaire (102) pour la structure de chaîne de blocs (100) est employé en tant que deuxième paramètre de la fonction de concaténation (110) non dépendante d'un bloc, de sorte que la première fonction de concaténation (112) bidirectionnelle dépendante d'un bloc créée est dépendante formant une paire à la fois du dernier bloc (104) de la structure de chaîne de blocs (100) et du bloc supplémentaire (102) pour la structure de chaine de blocs (100),
• la concaténation bidirectionnelle du dernier bloc (104) de la structure de chaîne de blocs (100) avec le bloc supplémentaire (102) pour la structure de chaîne de blocs (100), où la concaténation bidirectionnelle comprend une transformation du dernier bloc (104) de la structure de chaîne de blocs (100) en un premier texte chiffré moyennant l'emploi de la première fonction de concaténation (112) bidirectionnelle dépendante d'un bloc et une transformation du bloc supplémentaire (102) pour la structure de chaîne de blocs (100) moyennant l'emploi de la première fonction de concaténation (112) bidirectionnelle dépendante d'un bloc en un deuxième texte chiffré,
• le stockage de la structure de chaîne de blocs (101) élargie résultante, laquelle comprend les premier et deuxième textes chiffrés.

2. Procédé selon la revendication 1, dans lequel les transformations moyennant l'emploi de la première fonction de concaténation (112) bidirectionnelle dépendante d'un bloc comprennent respectivement un chiffrement des blocs.

3. Procédé selon la revendication 1, dans lequel la transformation moyennant l'emploi de la première fonction de concaténation (112) bidirectionnelle dépendante d'un bloc comprend respectivement une offuscation des blocs.

4. Procédé selon l'une des revendications précédentes, dans lequel, dans le cas du dernier bloc (104) de la structure de chaîne de blocs (100), il s'agit d'un troisième texte chiffré, lequel a été généré à partir d'un texte en clair moyennant l'emploi d'une deuxième fonction de concaténation bidirectionnelle dépendante d'un bloc, où la deuxième fonction de concaténation bidirectionnelle dépendante d'un bloc est dépendante en formant une paire à la fois de l'avant-dernier bloc (106) de la structure de chaîne de blocs (100) et du dernier bloc (104) de la chaîne de blocs (100).

5. Procédé selon l'une des revendications précédentes, où le procédé comprend en outre, pour l'accès aux données (214) stockées dans le bloc supplémentaire (102) et/ou pour la vérification de la validité de la concaténation bidirectionnelle du dernier bloc (104) avec le bloc supplémentaire (102) :
• la mise au point d'une fonction de concaténation inverse (120) non dépendante d'un bloc,
• la création d'une première fonction de concaténation inverse (122) bidirectionnelle dépendante d'un bloc à partir de la fonction de concaténation inverse (120) non dépendante d'un bloc, où, pour la création, un contenu de donnée du premier texte chiffré est employé en tant que premier paramètre et un contenu de bloc du deuxième texte chiffré est employé en tant que deuxième paramètre de la fonction de concaténation inverse (120) non dépendante d'un bloc, de sorte que la première fonction de concaténation inverse (122) bidirectionnelle dépendante d'un bloc créée est dépendante en formant une paire à la fois du premier texte chiffré et du deuxième texte chiffré,
• le déchiffrement du deuxième texte chiffré, où le déchiffrement comprend une retransformation du deuxième texte chiffré dans le bloc supplémentaire (102) moyennant l'emploi de la première fonction de concaténation inverse (122) bidirectionnelle dépendante du bloc.

6. Procédé selon l'une des revendications précédentes, dans lequel, dans le cas de l'avant-dernier bloc (106) de la structure de chaîne de blocs, il s'agit d'un quatrième texte chiffré, lequel a été généré à partir d'un cinquième texte chiffré moyennant l'emploi de la deuxième fonction de concaténation bidirectionnelle dépendante d'un bloc, où le procédé comprend en outre, pour l'accès aux données (214) stockées dans le dernier bloc (104) et/ou pour la vérification de la validité de la concaténation bidirectionnelle du dernier bloc (104) avec le bloc supplémentaire (102) :
• le déchiffrement du premier texte chiffré, où le déchiffrement comprend une retransformation du premier texte chiffré dans le troisième texte chiffré moyennant l'emploi de la première fonction de concaténation inverse (122) bidirectionnelle dépendante du bloc,
• la création d'une deuxième fonction de concaténation inverse bidirectionnelle dépendante d'un bloc à partir de la fonction de concaténation inverse (120) non dépendante d'un bloc, où, pour la création, un contenu de donnée du quatrième texte chiffré est employé en tant que premier paramètre et un contenu de bloc du troisième texte chiffré est employé en tant que deuxième paramètre de la fonction de concaténation inverse (120) non dépendante d'un bloc, de sorte que la deuxième fonction de concaténation inverse bidirectionnelle dépendante d'un bloc créée est dépendante en formant une paire à la fois du troisième texte chiffré et du quatrième texte chiffré,
• le déchiffrement du troisième texte chiffré, où le déchiffrement comprend une retransformation du troisième texte chiffré en texte clair du dernier bloc (104) moyennant l'emploi de la deuxième fonction de concaténation inverse bidirectionnelle dépendante du bloc.

7. Procédé selon l'une des revendications précédentes, où le procédé comprend en outre une production d'une copie raccourcie (103) de la structure de chaîne de blocs (100, 101) concaténée de manière bidirectionnelle, où, dans la copie raccourcie (103), au moins un segment de chaîne intérieur (134) de la structure de chaîne de blocs (100, 101) est remplacé par une fonction de vérification entre un premier bloc et un deuxième bloc de la structure de chaîne de blocs (100, 101), où la fonction de vérification comprend une combinaison (150) de toutes les fonctions de concaténation inverses (140, 142) bidirectionnelles dépendantes d'un bloc, lesquelles sont dépendantes en formant des paires de blocs du segment de chaîne (134) intérieur.

8. Procédé selon la revendication 7, dans lequel le segment de chaîne (134) intérieur enlevé comprend une multiplicité de blocs de la structure de chaîne de blocs (100, 101) concaténée de manière bidirectionnelle.

9. Procédé selon l'une des revendications 7 à 8, où le procédé comprend en outre :
• la préparation des blocs du segment de chaîne (134) intérieur remplacé,
• la vérification de l'authenticité et/ou de l'intégrité des blocs préparés du segment de chaîne (134) intérieur remplacé, où la vérification comprend une comparaison de la fonction de vérification avec des fonctions de concaténation inverses (140, 142) bidirectionnelles dépendantes d'un bloc, lesquelles sont calculées moyennant l'emploi de la fonction de concaténation inverse (120) non dépendante d'un bloc pour les blocs du segment de chaîne (134) intérieur remplacé.

10. Procédé selon la revendication 9, dans lequel, suite à une vérification réussie de l'authenticité et/ou de l'intégrité des blocs préparés du segment de chaîne (134) intérieur remplacé, la copie raccourcie (103) de la structure de chaîne de blocs (100, 101) concaténée de manière bidirectionnelle est complétée pour donner la structure de chaîne de blocs (100, 101) concaténée de manière bidirectionnelle complète, où le complément comprend un remplacement de la fonction de vérification par les blocs du segment de chaîne (134) intérieur.

11. Système informatique (200) permettant le stockage (206) de manière protégée contre des manipulations de données (214) dans une structure de chaîne de blocs (100, 101) concaténée de manière bidirectionnelle, dans lequel la structure de chaîne de blocs (100) est stockée dans une mémoire (206) du système informatique (200), où une fonction de concaténation (110) non dépendante d'un bloc est stockée dans une zone de mémoire (208) protégée de la mémoire (206), où le système informatique (200) comprend en outre un processeur (202), où le processeur (202) est conçu pour, par l'exécution des instructions de programme (204), commander le système informatique (200) pour qu'il :
• crée un bloc supplémentaire (102) pour la structure de chaîne de blocs (100), lequel comprend les données (214) à stocker,
• crée une première fonction de concaténation (112) bidirectionnelle dépendante d'un bloc à partir de la fonction de concaténation (110) non dépendante d'un bloc, où, pour la création, un contenu de donnée du dernier bloc (104) de la structure de chaîne de blocs (100) est employé en tant que premier paramètre et un contenu de bloc du bloc supplémentaire (102) pour la structure de chaîne de blocs (100) est employé en tant que deuxième paramètre de la fonction de concaténation (110) non dépendante d'un bloc, de sorte que la première fonction de concaténation (112) bidirectionnelle dépendante d'un bloc créée est dépendante en formant une paire à la fois du dernier bloc (104) de la structure de chaîne de blocs (100) et du bloc supplémentaire (102) pour la structure de chaine de blocs (100),
• effectue la concaténation bidirectionnelle du dernier bloc (104) de la structure de chaîne de bloc (100) avec le bloc supplémentaire (102) pour la structure de chaîne de blocs (100), où la concaténation bidirectionnelle comprend une transformation du dernier bloc (104) de la structure de chaîne de blocs (100) en un premier texte chiffré moyennant l'emploi de la première fonction de concaténation (112) bidirectionnelle dépendante d'un bloc et une transformation du bloc supplémentaire (102) pour la structure de chaîne de blocs (100) moyennant l'emploi de la première fonction de concaténation (112) bidirectionnelle dépendante d'un bloc en un deuxième texte chiffré,
• stocke la structure de chaîne de blocs (101) élargie résultante dans la mémoire (206), où le stockage comprend un remplacement du dernier bloc (104) de la structure de chaîne de blocs (100) par le premier texte chiffré et un ajout du deuxième texte chiffré à la structure de chaîne de blocs (100).
